Europäisches Patentamt

European Patent Office

Office européen des brevets

(19)

(11) **EP 0 524 107 B1**

(12) **FASCICULE DE BREVET EUROPEEN**

(45) Date de publication et mention
de la délivrance du brevet:
**04.12.1996 Bulletin 1996/49**

(51) Int Cl.6: **E02F 3/84**, E02F 3/76,
E01C 19/00

(21) Numéro de dépôt: **92402074.6**

(22) Date de dépôt: **17.07.1992**

(54) **Procédé de guidage automatisé d'un engin de travaux publics**

Verfahren zur automatischen Steuerung von Erdbewegungsmaschinen

Automatic guiding method for an earthmoving machine

(84) Etats contractants désignés:
**AT BE CH DE DK ES FR GB GR IT LI LU MC NL PT SE**

(30) Priorité: **19.07.1991 FR 9109163**

(43) Date de publication de la demande:
**20.01.1993 Bulletin 1993/03**

(73) Titulaire: **BEUGNET S.A.**
**F-62001 Arras (Pas de Calais) (FR)**

(72) Inventeur: **Guillon, Roger**
**F-6201 Arras (Pas de Calais) (FR)**

(74) Mandataire: **Cabinet HERRBURGER**
**115, Boulevard Haussmann**
**75008 Paris (FR)**

(56) Documents cités:
EP-A- 0 214 416    FR-A- 2 637 625
US-A- 4 162 708    US-A- 4 197 032

• PATENT ABSTRACTS OF JAPAN vol. 8, no. 237 (P-310)(1674) 30 Octobre 1984 & JP-A-59 112 219 ( HITACHI DENSHI ENGINEERING ) 28 Juin 1984
• PATENT ABSTRACTS OF JAPAN vol. 9, no. 2 (P-325)(1725) 8 Janvier 1985 & JP-A-59 153 116 ( MITSUBISHI DENKI K.K. ) 1 Septembre 1984
• GERARD DURBEC 'COURS DE TOPOMETRIE GENERALE- TOME 1 : GENERALITES, INSTRUMENTS DE MESURE' 30 Octobre 1969 , EDITIONS EYROLLES , PARIS

**EP 0 524 107 B1**

## Description

La présente invention concerne un procédé de guidage automatisé d'un engin de travaux publics, tel qu'un engin de répandage des couches constitutives d'une chaussée, par exemple d'une autoroute, muni d'un outil, notamment d'une lame de nivellement permettant l'obtention d'une surface plane prédéterminée.

La construction d'une chaussée, notamment d'une autoroute, exige la mise en oeuvre de plusieurs opérations successives dont la première correspond à la conception proprement dite du tracé de la chaussée, c'est-à-dire la détermination de ses points de passage, notamment des coordonnées des points correspondant à son axe et à chacun de ses bords. Les professionnels disposent, à cet effet, de plusieurs logiciels parmi lesquels on peut citer le logiciel MACAO proposé par la Société SCETAUROUTE.

Ayant ainsi effectué cette opération préalable, les « géomètres terrassiers » implantent sur le terrain des bornes matérialisant l'axe de la chaussée, en se basant sur des bornes géodésiques naturelles telles que clochers d'églises, châteaux d'eau, etc. précisées par l'Institut Géographique National, en travaillant par approches successives ; ils calculent ensuite, pour un certain nombre de points de préférence équidistants nommés points kilométriques, les coordonnées dans un repère tridimensionnel orthonormé Oxyz de l'axe ainsi que des bords gauche et droit de la chaussée, puis, placent sur ces bords des piquets supports de fils directionnels en veillant à ce que chaque piquet soit la projection orthogonale d'un point kilométrique par rapport à l'axe de la chaussée.

Ces opérations préalables étant terminées, il est alors possible d'entreprendre la construction proprement dite de la chaussée, c'est-à-dire le terrassement (transfert de matériaux, nivellement, compactage) et de répandre successivement plusieurs couches de matériaux différents.

Cette dernière opération consistant à répandre successivement les différents couches de matériaux constitutifs de la chaussée (couche de forme, de fondation, de base et de roulement) demande une précision toute particulière, notamment en ce qui concerne l'épaisseur de chaque couche. Un écart de plus de 3 % sur l'épaisseur d'une couche peut, en effet, mettre en péril, pour des raisons financières, l'existence même d'une entreprise, tandis qu'une épaisseur inférieure à l'épaisseur théorique aboutit à la fabrication d'une chaussée dont la résistance mécanique est inférieure à celle du projet.

Les considérations susmentionnées ont amené les spécialistes à tenter d'automatiser le guidage des engins de répandage des couches constitutives d'une chaussée, notamment des couches de forme et de fondation.

Une telle automatisation permet, en effet, de diminuer les charges pesant sur le conducteur en l'aidant dans la conduite, ce qui lui permet de se consacrer aux exigences principales, dans le souci d'une meilleure qualité et dans de meilleures conditions de sécurité ; en outre, la modernisation du matériel permet d'augmenter la fiabilité et la rapidité des contrôles. L'ouvrage peut alors être optimisé en réduisant les quantités de matériaux. Ainsi, l'automatisation doit permettre de réduire les coûts de production tout en augmentant la qualité du travail demandé.

Pour satisfaire aux impératifs susmentionnés, les professionnels ont déjà proposé de guider le déplacement de l'engin le long de deux fils directionnels implantés sur les piquets posés par les géomètres de part et d'autre de la chaussée. Pour permettre ce guidage, l'outil de l'engin est muni d'un système de palpeurs coopérant avec des vérins hydrauliques et des électrovannes pour rechercher le fil et maintenir un contact permanent.

Un tel asservissement dans les trois directions de l'espace s'est cependant révélé, à l'usage, particulièrement onéreux et peu fiable : en effet, le positionnement directement par les géomètres des fils directionnels en x, y et z correspond à une opération particulièrement longue, incommode et archaïque ; de plus, la flèche inévitable du fil entre deux piquets rend aléatoire les précisions sur la cote z à respecter d'autant plus que les potences donnent un effet de rebondi ; or, c'est justement à ce niveau que l'exigence de précision est la plus importante (elle est, en effet, de l'ordre du centimètre, c'est-à-dire dix fois supérieure à celle nécessaire en x ou en y).

Un tel guidage sur fils directionnels est à titre d'exemple décrit dans le document US-A-4 197 032, il est cependant à noter que conformément à ce brevet américain, il n'est pas prévu de réglage selon l'axe des z, et que ce document concerne en fait un asservissement latéral de la trajectoire d'une fraise utilisée pour mettre le sol à niveau dans des courbes.

La présente invention a pour objet de remédier à ces inconvénients en proposant un procédé de guidage automatisé d'un engin de travaux publics du type ci-dessus, dont la mise en oeuvre soit relativement simple et rapide et qui permette parallèlement de garantir la précision voulue quant au positionnement de l'outil sur l'axe des z.

Conformément à ce procédé et de manière connue en elle-même, on détermine préalablement les points de passage de la chaussée et on place sur ses bords des piquets supports de fils directionnels susceptibles d'être maintenus en permanence en contact avec l'engin de façon à guider son déplacement.

Selon l'invention, ce procédé est caractérisé en ce que :

- on monte l'outil à la partie inférieure de l'engin de travaux publics de façon à pouvoir faire varier la hauteur HN qui correspond à la distance du châssis de cet engin à l'outil,
- on calcule et introduit dans la mémoire d'un micro-ordinateur lié à l'engin les cordonnées $x_i$, $y_i$, $z_i$ dans un système

tridimensionnel orthonormé Oxyz d'un certain nombre de points kilométriques PKi notamment équidistants de la chaussée correspondant à la position théorique de l'outil lors de la réalisation de celle-ci,

- on utilise les fils directionnels pour guider l'engin dans le plan x-O-y,
- au cours de ce déplacement on mesure continuellement la position x y de l'outil dans le plan x-O-y et on transmet cette donnée au micro-ordinateur qui détermine en réponse et par interpolation à partir des points kilométriques l'altimétrie théorique z correspondante,
- on émet un faisceau, notamment un faisceau laser rotatif décrivant un plan de référence essentiellement parallèle à la chaussée dont on calcule l'équation avant de l'introduire dans la mémoire du micro-ordinateur de façon à permettre de calculer l'altimétrie réelle de l'outil,
- on fixe à la partie supérieure du châssis au moins un ensemble connu en lui-même constitué par un mât télescopique essentiellement vertical de hauteur variable HL à l'extrémité duquel est monté un récepteur asservi de façon à être constamment maintenu dans le plan de référence laser,
- on mesure en permanence la hauteur HL du mât télescopique et la hauteur HN qui correspond à la distance du châssis à l'outil et l'on transmet les hauteurs ainsi mesurées au micro-ordinateur,
- on détermine en permanence l'altimétrie zl du récepteur à partir de l'équation du plan de référence,
- on en déduit l'altimétrie réelle z de l'outil par la formule :

$$z = zl - (HO + HN + HC + HL)$$

dans laquelle HO correspond à la hauteur constante de l'outil tandis que HC correspond à la hauteur constante du châssis,

- on compare l'altimétrie réelle ainsi calculée à l'altimétrie théorique de l'outil préalablement déterminée par interpolation à partir des points kilométriques, et
- on modifie le cas échéant en réponse la hauteur HN qui correspond à la distance du châssis à l'outil de façon à faire coïncider les altimétries réelle et théorique de ce dernier.

Compte tenu de ce qui précède, ce procédé consiste à conserver le guidage traditionnel en x et en y à partir des fils directionnels, mais à remplacer, pour le guidage en z, ce guidage traditionnel par une boucle de régulation totalement différente. Cette boucle de régulation permet d'augmenter la précision du guidage altimétrique, ce qui est particulièrement important, étant donné que, comme il a déjà été indiqué, plus la précision est grande selon l'axe des z, c'est-à-dire sur l'épaisseur des matériaux à répandre, moindre est le surcoût de l'épaisseur de couches réalisée, ce qui peut permettre à une entreprise de réaliser une économie considérable ; de plus, le positionnement des fils directionnels dans le seul plan x-O-y permet de réduire de plus de la moitié le travail lié à l'implantation des piquets, ce qui peut, là aussi, permettre de réaliser une économie considérable.

Selon l'invention, on peut avantageusement implanter les piquets à une distance de 10 à 15 mètres les uns des autres.

La possibilité de mettre en oeuvre le procédé conforme à l'invention est liée au montage particulier de l'outil sur le châssis de l'engin et à la désolidarisation de ces deux éléments qui permet de maintenir l'outil à la cote altimétrique désirée quel que soit l'état de surface sur lequel se trouve l'engin.

Bien entendu, dans le cas général où l'outil se trouve dans le plan x-O-y dans une position située entre deux points kilométriques, ses coordonnées sont déterminées à partir de ces points non pas directement mais par un processus d'interpolation qui peut être quelconque sans pour cela sortir du cadre de l'invention.

Il est essentiel de noter que, conformément à l'invention, le faisceau laser a pour seul rôle de créer un plan de référence à partir duquel le micro-ordinateur peut calculer l'altimétrie réelle z de l'outil : la distance entre le plan laser et l'outil varie continuellement, et ce plan ne sert, en fait, que comme moyen de mesure et non comme moyen d'action.

Pour effectuer ce calcul on utilise un système connu déjà disponible dans le commerce constitué par un récepteur monté à l'extrémité d'un mât télescopique et asservi de façon à rester constamment dans le plan de référence.

Le document US-A-4 162 708 décrit à titre d'exemple l'utilisation classique d'un tel système connu conformément à laquelle le récepteur monté sur l'outil maintient ce dernier à une distance constante du plan laser de référence.

Selon une autre caractéristique de l'invention liée à la nécessite de réguler la position de l'outil au niveau des deux bords de la chaussée, on fixe sur le châssis de l'engin, deux récepteurs coopérant avec deux mâts télescopiques, respectivement situés de part et d'autre de l'axe longitudinal de l'engin, au niveau des extrémités de l'outil et dont l'un matérialise le bord gauche de la chaussée, tandis que l'autre matérialise le bord droit.

Conformément à l'invention, on peut, à titre d'exemple, utiliser un matériel existant commercialisé sous la dénomination « LASER PLANE » (marque déposée) par la Société SPECTRA PHYSICS qui est composé d'un émetteur laser d'une portée de trois cents mètres à double affichage de pente en X et Y (0 à 10 %), de deux cellules de réception omnidirectionnelles, de deux mâts électriques d'une course de un mètre sur lesquels sont montées les cellules, ainsi que de deux boîtiers de contrôle auxquels on peut relier les mâts ainsi que des électrovannes permettant la commande des vérins de l'engin.

Selon une autre caractéristique de l'invention, on transmet en permanence au micro-ordinateur, d'une part, la longueur de chacun des mâts télescopiques et, d'autre part, la position des extrémités droite et gauche de l'outil par rapport au châssis de l'engin, par l'intermédiaire de potentiomètre linéaire.

L'asservissement de l'outil selon l'axe des z repose donc sur le fait que les récepteurs doivent rester dans une position calculée constante par rapport au plan de référence. En conséquence, si l'outil est amené à descendre ou à monter à cause des accidents de la chaussée, les récepteurs envoient un ordre correspondant au micro-ordinateur qui fait alors monter ou descendre l'outil à l'aide des vérins et des électrovannes par l'intermédiaire desquels il est monté sur l'engin. La nouvelle hauteur des mâts est alors transmise au micro-ordinateur.

L'outil est, par ailleurs, également muni d'un système permettant de faire monter ou descendre les mâts par échelon à l'aide d'un bouton poussoir ; ceci permet de fixer une nouvelle cote de l'outil par rapport au plan de référence.

Le processus susmentionné, qui implique une désolidarisation de l'outil et de l'engin, présente le double intérêt de permettre de commander l'outil selon le profil transversal de la chaussée et de le conserver à la cote désirée quel que soit l'état de surface sur lequel se trouve l'engin, et ce tout en n'ayant que deux mâts disposés aux extrémités de l'outil et dont l'un matérialise le bord gauche de la chaussée tandis que l'autre matérialise le bord droit.

Selon une autre caractéristique de l'invention, pour calculer l'équation du plan de référence, tout comme celui des coordonnées relatives aux points kilométriques, on utilise le repère tridimensionnel orthonormé, bien connu des géomètres, dit « repère absolu de Lambert ». Ce système d'axes, basé sur un découpage en quatre bandes du territoire français, permet la réalisation « planimétrique » des cartes géométriques. Selon ce repère, l'axe des x est dirigé dans le sens croissant vers l'Est, l'axe des y est dirigé dans le sens croissant vers le Nord géographique et l'axe des z est dirigé dans le sens croissant vers le Zénith.

L'origine de ce repère est le point le plus au Sud et à l'Ouest de la bande considérée.

Pour permettre la détermination de l'équation du plan de référence, le géomètre situe tout d'abord la position de l'émetteur laser, puis dirige un plan parallèle horizontal dans le profil longitudinal de la chaussée, avant de relever les coordonnées de 4 points de la droite matérialisée par le faisceau et de relever celui-ci d'un angle vertical lu sur un vernier. Le géomètre rentre ensuite ces valeurs dans le micro-ordinateur qui se charge du calcul de l'équation à proprement parler, c'est-à-dire 3 points déterminés par le plan et le 4ème servant à confirmer.

Cette démarche permet de savoir constamment où se situe le plan de référence et donc à quelle altitude évolue l'engin ; il suffit donc de faire bouger l'outil suivant l'axe des z pour le mettre à la bonne cote.

Compte tenu de ce qui précède, lorsque l'on est en possession de l'équation du plan de référence et de la position théorique de l'outil, en deux points, on peut en déduire les déplacements théoriques effectués par les deux récepteurs entre ces deux points. Pour ramener l'outil à la bonne cote, il faut donc faire monter ou descendre les récepteurs de façon à ramener l'outil à la cote précédente et parallèlement lui donner sa nouvelle cote et donc redéplacer les récepteurs en conséquence. Ces deux séquences n'en font, bien entendu, qu'une et le déplacement des récepteurs est celui correspondant à la pente du plan de référence compensée par la nouvelle consigne altimétrique réalisée. Il faut, en outre, apporter à chaque mouvement des mâts relevé par le micro-ordinateur une valeur corrective de proportionnalité tenant compte de la pente en travers du plan de référence par rapport à la route.

La mise en oeuvre du processus susmentionné exige de pouvoir connaître, à chaque instant, la position de l'outil dans le plan x-O-y.

A cet effet et selon une autre caractéristique de l'invention, on mesure la position $x_i$, $y_i$ de l'outil, notamment de chacune de ses extrémités droite et gauche, dans le plan x-O-y à partir de valeurs d'abscisse curviligne transmises au micro-ordinateur par au moins la moyenne des deux roues codeuses montées sur l'engin de part et d'autre de son axe longitudinal.

De telles roues codeuses sont connues en tant que telles et à titre d'exemple décrites dans le document JP-A-59 112 219.

Ces roues codeuses permettent, connaissant la position de départ de l'engin, de mesurer la distance qu'il parcourt ; sachant à quelle distance on se trouve du point de départ, on peut alors déterminer les positions $x_i$, $y_i$ de l'outil et en déduire l'altimétrie théorique $z_i$ correspondante.

Conformément à l'invention, chaque roue codeuse est constituée par une roue munie, sur sa périphérie, d'une succession de trous et de pleins et coopérant avec un capteur susceptible de transmettre une impulsion électrique au micro-ordinateur à chaque passage d'un plein, le micro-ordinateur comptabilisant les impulsions pour déterminer à chaque instant l'abscisse curviligne de l'outil et par suite sa position $x_i$, $y_i$ dans le plan x-O-y.

Pour des raisons de précision, les trous des roues codeuses donnent une impulsion tous les 4 mm.

Compte tenu du fait que la circonférence des roues codeuses varie en fonction de la pression à laquelle est gonflé le pneu, on peut ainsi obtenir une précision maximale de l'ordre de deux centimètres sur dix mètres, ce qui peut être insuffisant compte tenu du fait que l'engin peut traiter environ quinze cent à dix-huit cents mètres par jour.

Pour remédier à cet inconvénient, et selon une autre caractéristique de l'invention, on réactualise l'information donnée par les roues codeuses au niveau de piquets, précisément implantés à intervalles réguliers, notamment au niveau de chacun des piquets supports des fils directionnels qui sont distants de dix ou quinze mètres. Ainsi, l'erreur faite par les roues codeuses sur cette distance est de l'ordre de deux à trois centimètres.

En conséquence, et en considérant que l'on se trouve dans une côte à 10 %, ce qui est le maximum pour une autoroute, les trois centimètres d'erreur en abscisse curviligne se traduisent par une erreur de moins de deux millimètres en altimétrie, ce qui est négligeable.

Pour garder une bonne précision sur la distance parcourue par l'engin, il est nécessaire de veiller à ce que la pression des roues codeuses avoisine la pression pour laquelle l'erreur est minimale, et aussi à ce que le pneu ne se dégonfle pas en cours de journée.

Pour permettre de réactualiser l'information transmise par les roues codeuses au niveau de chaque des piquets et selon une autre caractéristique de l'invention, l'outil est muni, à chacune de ses extrémités, d'une tige métallique essentiellement horizontale susceptible de pivoter lorsqu'elle capte un piquet de façon à transmettre une impulsion au micro-ordinateur.

Le processus conforme à l'invention par lequel on utilise deux roues codeuses, c'est-à-dire une de chaque côté de l'outil, permet d'obtenir une information correcte pour chaque bord de la chaussée, même dans les courbes. Ceci permet de traiter indépendamment le bord droit du bord gauche.

Chaque passage de l'un des repères a donc une action sur le micro-ordinateur et opère une réactualisation du système de calcul, sans exercer aucune correction au niveau de la roue et de son système de comptage. La valeur de l'impulsion est donc une donnée de départ invariable.

Selon une autre caractéristique de l'invention, pour obtenir l'altimétrie réelle z de l'outil à partir, d'une part, des coordonnées $x_i$, $y_i$, $z_i$ des points kilométriques $PK_i$ et, d'autre part, des coordonnées réelles x, y mesurées dans le plan x-O-y, on détermine les coordonnées des points kilométriques les plus proches des bords de l'outil, et à partir de celles-ci, on calcule l'équation de deux droites théoriques correspondant respectivement aux bords gauche et droit de la chaussée, ensuite et disposant ainsi des coordonnées réelles des points correspondant aux bords gauche et droit de l'outil, on calcule l'équation de la droite transversale représentant l'arête de l'outil qui joint ces deux points, on détermine les coordonnées des points d'intersection de cette droite transversale avec les prolongements des mâts télescopiques, puis on calcule les équations des droites verticales passant par ces points d'intersection ainsi que les coordonnées des points d'intersection de ces droites verticales avec le plan de référence, de façon à permettre au micro-ordinateur de mettre en oeuvre l'asservissement recherché à partir des informations qui lui sont transmises en permanence.

Selon une autre caractéristique de l'invention, dans l'hypothèse où les coordonnées x, y mesurées montrent que l'un des bords de l'outil est éloigné d'un point kilométrique d'une distance supérieure à une valeur constante C prédéterminée, on choisit pour droite théorique correspondant à ce bord de la chaussée, la droite joignant les points kilométriques $PK_i$ et $PK_{i+1}$ entre lesquels se trouve celui-ci.

Selon une autre caractéristique de l'invention, dans l'hypothèse où les coordonnées x, y mesurées montrent que l'un des bords de l'outil est éloigné d'un point kilométrique $PK_i$ d'une distance inférieure à une valeur constante C prédéterminée, on détermine les équations des deux droites joignant respectivement les points kilométriques $PK_i$ et $PK_{i+1}$ d'une part, et $PK_i$ et $PK_{i-1}$ d'autre part, on détermine sur chacune de ces droites les coordonnées des points $PK_i$ + C et $PK_i$ - C, et on choisit pour droite théorique correspondante à ce bord de la chaussée, la droite joignant les deux points $PK_i$ + C et $PK_i$ - C.

Les caractéristiques du procédé conforme à l'invention, seront décrites plus en détail en se référant aux figures 1 à 4 dans lesquelles :

- la figure 1 est une représentation schématique d'une installation pour la mise en oeuvre du procédé conforme à l'art antérieur,
- la figure 2 est une représentation schématique correspondant à la figure 1, mais dans le cas du procédé conforme à l'invention,
- la figure 3 correspond à un détail du dispositif représenté sur la figure 2,
- la figure 4 correspond à un schéma synoptique du procédé conforme à l'invention.

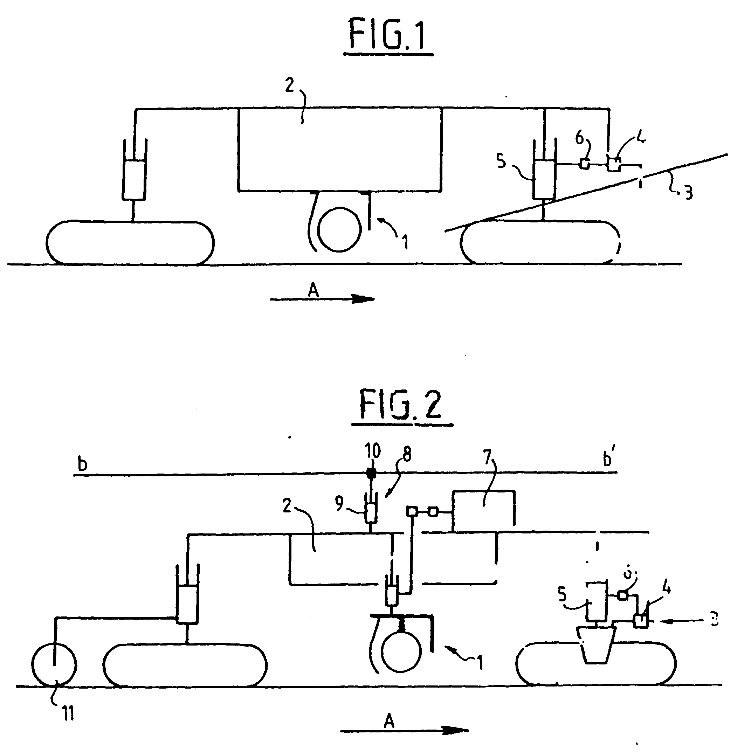

Selon la figure 1, conformément à l'art antérieur, l'outil de nivellement 1 est monté fixe à la partie inférieure du châssis 2 de l'engin de travaux publics qui se déplace dans le sens indiqué par la flèche A. Le guidage de l'engin selon les trois coordonnées x, y et z, est effectué par l'intermédiaire d'une référence constituée par des fils directionnels a, a' grâce à un système de palpeurs 4 coopérant avec des vérins hydrauliques de nivellement 5 et des électrovannes 6.

Selon la figure 2, conformément à l'invention, le guidage à partir des fils directionnels n'est maintenu que pour les coordonnées x et y, et le guidage selon l'axe des z est fondamentalement différent.

Sur cette figure, seuls ont été représentés les éléments correspondant au guidage de l'engin sur l'un des bords de la chaussée ; des éléments similaires sont, bien entendu, nécessaires pour permettre le guidage sur l'autre bord.

L'outil de nivellement 1 est en effet monté mobile en position à la partie inférieure du châssis 2 de l'engin de travaux publics, et celui-ci est équipé, d'une part, d'un micro-ordinateur 7, et, d'autre part, à sa partie supérieure, d'un ensemble 8 disponible dans le commerce constitué par un mât télescopique 9 à l'extrémité duquel est monté un récepteur 10 susceptible d'être maintenu constamment dans un plan de référence laser, essentiellement parallèle à la chaussée schématisé par la droite b, b' et engendré indépendamment.

Une roue codeuse 11 est, par ailleurs, montée sur le châssis 2 de l'engin de travaux publics, pour indiquer à chaque instant la valeur de l'abscisse curviligne de l'outil, et donc, ses coordonnées dans le plan x-O-y.

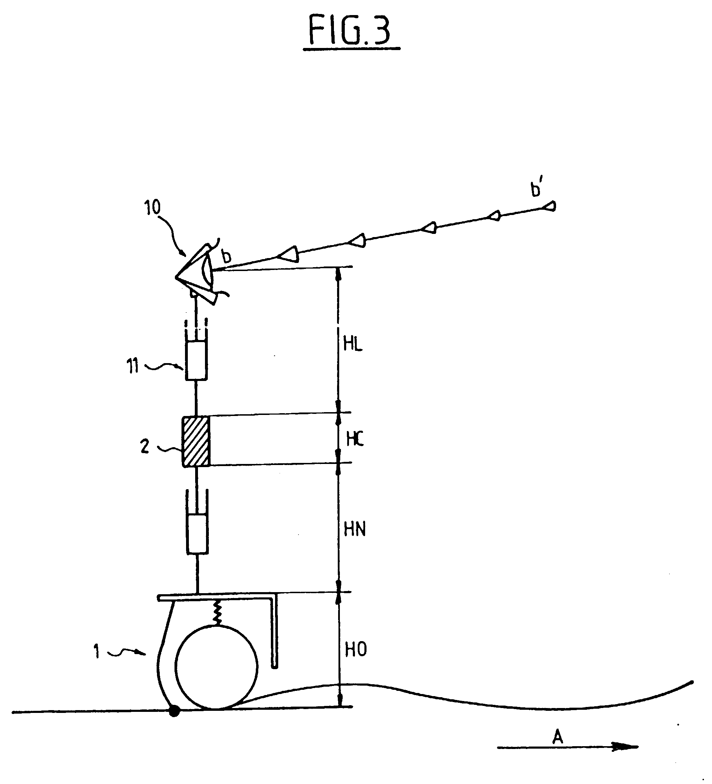

Selon la figure 3, l'altimétrie zl du récepteur laser 10 est, à chaque instant, égale à la somme de l'altimétrie z de l'outil et des hauteurs HO, HN, HC et HL :

$$zl = z + HO + HN + HC + HL$$

HO  qui correspond à la hauteur de l'outil 1 est constante,

HC  qui correspond à la hauteur du châssis 2 est également constante,

HL  qui correspond à la hauteur du mât télescopique 11 varie constamment et ce de façon automatique,

HN  qui correspond à la position de l'outil 1 par rapport au châssis 2 est la variable qui est asservie conformément à l'invention.

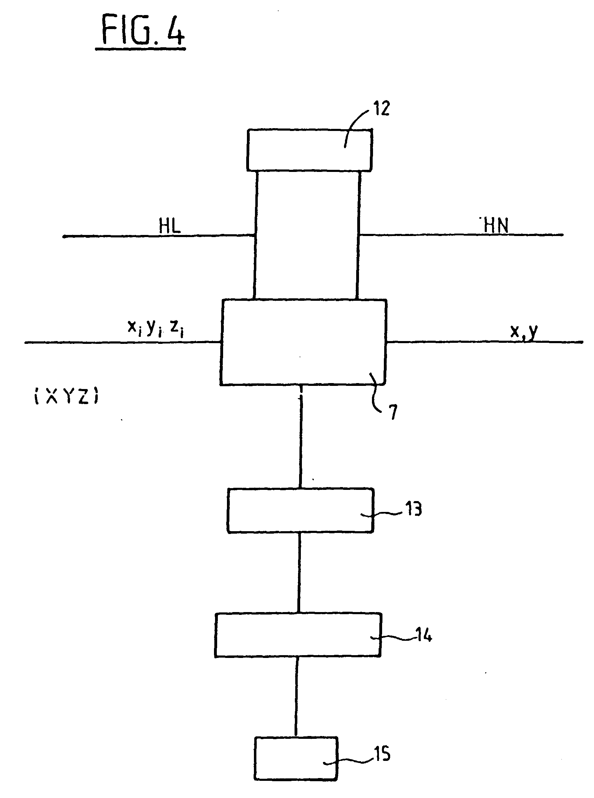

Selon la figure 4, on introduit préalablement dans la mémoire du micro-ordinateur 7, d'une part, les coordonnées théoriques xi, yi, zi de l'outil pour un certain nombre de points kilométriques, et d'autre part, l'équation XYZ du plan de référence.

Le micro-ordinateur 7 reçoit, en outre, constamment les valeurs des hauteurs HL correspondant à la hauteur du mât télescopique 10 et HN correspondant à la distance du châssis 2 à l'outil 1 ; ces hauteurs sont mesurées en permanence grâce à un système de potentiomètres représentés schématiquement par la référence 12.

La roue codeuse 11 fournit également en permanence au micro-ordinateur la valeur de l'abscisse curviligne xi, yi instantanée de l'outil 1.

A partir de ces données, le micro-ordinateur 7 est apte à déterminer, d'une part, l'altimétrie théorique zi de l'outil (grâce aux coordonnées théoriques xi, yi, zi stockées dans sa mémoire et par un processus d'interpolation adapté) et d'autre part, l'altimétrie réelle zl du récepteur laser 10 (grâce à l'équation du plan de référence laser XYZ également stockée dans sa mémoire).

Compte tenu de la valeur de l'altimétrie réelle du récepteur laser 10 selon l'équation susmentionnée, la hauteur HN qui correspond à la position de l'outil 1 par rapport au châssis 2 doit avoir la valeur suivante :

$$HN = zl - HO - HC - HL - zi$$

Cette valeur est alors comparée à la valeur réelle telle que mesurée de la hauteur HN dans une boucle de régulation 13, et cette valeur est constamment asservie à sa valeur théorique grâce à un système d'électrovannes 14 agissant sur un vérin 15 de commande de la distance du châssis 2 à l'outil 1.

La chaîne de calcul et d'asservissement utilisée lors de la mise en oeuvre du procédé de guidage automatisé d'un engin de travaux publics qui fait l'objet de l'invention sera décrite de manière plus précise à l'aide de l'exemple ci-dessous :

La mise en oeuvre du procédé conforme à l'invention implique le traitement numérique de données et de mesures géométriques sous forme d'ensembles de valeurs analogiques et numériques exprimées et acquises dans le repère absolu de Lambert.

A cet effet, et de manière concrète, on introduit préalablement dans le micro-ordinateur un tableau de nombres représentant les coordonnées théoriques xi, yi, zi des points kilométriques telles qu'issues d'études, par le biais d'un support approprié à la technologie mise en oeuvre, notamment une disquette informatique ; ce tableau sert de point de départ aux opérations de calcul et d'asservissement.

Les points kilométriques, dont les coordonnées sont introduites dans la mémoire du micro-ordinateur, représentent les lignes théoriques des deux bords de la chaussée à réaliser ; ils seront, dans ce qui suit, appelés PKi gauche et PKi droit,

i variant de 0 à $\frac{\text{longueur de la chaussée}}{d}$ et d étant la distance séparant deux PK consécutifs, qui est fixée lors de l'étude et directement liée à la précision recherchée.

On introduit, en outre préalablement, dans la mémoire du micro-ordinateur, et à l'aide de moyens prévus à cet effet, notamment un clavier alphanumérique, des paramètres réels inhérents à la géométrie de l'engin (hauteur HC du châssis, hauteur de l'outil ...). Ces paramètres sont fixés, une fois pour toutes, et invariables pour toute la durée d'un travail sur un même chantier.

Ces opérations préalables ayant été effectuées, on introduit également dans la mémoire du micro-ordinateur, par l'intermédiaire des moyens précédemment cités, des données permettant de calculer l'équation du plan de référence : celles-ci consistent en une matrice contenant les coordonnées de points relevés dans un plan laser issu d'un générateur rotatif ; ces relevés géométriques doivent être effectués sur le chantier au moment où le procédé doit être opérationnel.

Par ailleurs, le micro-ordinateur est associé à plusieurs instruments spécifiques permettant d'effectuer les mesures géométriques indispensables qui sont montés de manière convenable sur l'engin de travaux publics : cette instrumentation peut, notamment, se composer de :

- deux capteurs lasers SPECTRA PHYSICS (marque déposée),
- deux potentiomètres linéaires PENNY & GILES (marque déposée),
- deux roues codeuses HOHNER (marque déposée),
- deux capteurs de position TELEMECANIQUE (marque déposée),

Les valeurs obtenues à partir de ces instruments peuvent être introduites dans le micro-ordinateur, soit par l'intermédiaire de convertisseurs analogiques numériques, soit directement.

Ayant acquis l'ensemble des données et mesures susmentionnées, le micro-ordinateur est apte à effectuer les calculs souhaités dont les étapes logiques de fonctionnement vont être énumérées ci-dessous :

- la première opération consiste à prendre en considération, d'une part, les coordonnées théoriques des points kilométriques PKi gauche et PKi droit et, d'autre part, l'abscisse curviligne réelle de l'outil qui est mise en correspondance avec les abscisses curvilignes théoriques des points kilométriques, puis à calculer les équations de deux droites situées de part et d'autre de l'axe longitudinal de la chaussée, et définies :

    - soit directement par deux points gauche et deux points droit du tableau des points kilométriques, si l'outil est éloigné de ces points d'une distance supérieure à une distance C constante fixée pour la totalité du chantier, c'est-à-dire si - en ne considérant que le côté gauche par exemple - le bord gauche de l'outil se trouve entre :

$$(PK_N + C)_{gauche} \text{ et } (PK_N + I - C)_{gauche}$$

    dans le cas d'un travail dans le sens des PK croissants,
    - soit par deux points gauche et deux points droit interpolés à partir du tableau des points kilométriques si l'outil est éloigné de ces points d'une distance inférieure à la distance C, c'est-à-dire si - en ne considérant par exemple que le côté gauche - le bord gauche de l'outil se trouve entre :

$$(PK_N - C)_{gauche} \text{ et } (PK_N + C)_{gauche}$$

    dans le cas d'un travail dans le sens des PK croissants,

- la seconde opération consiste à utiliser les données numériques fournies par les roues de mesure de l'abscisse curviligne parcourue, situées de part et d'autre de l'axe longitudinal de l'outil et à effectuer interpolations linéaires sur les équations de droites précédemment calculées pour déterminer les coordonnées de deux points - définis par l'avancement de l'outil depuis une origine spatio-temporelle déterminée,
- la troisième opération consiste à utiliser les coordonnées de ces deux points pour obtenir l'équation de la droite définie par l'arête de coupe de l'outil,
- la quatrième opération consiste à déterminer les coordonnées des points situés à l'intersection de cette droite et des droites définies par la chaîne de mesure altimétrique représentée sur la figure 3 (récepteurs laser et mâts télescopiques) en utilisant certains paramètres de la configuration du chantier et par l'intermédiaire d'interpolations linéaires sur l'équation de cette droite (telle qu'obtenue lors de la troisième opération),
- la cinquième opération consiste à calculer les équations des droites verticales passant par les points issus du calcul précédent dans le repère absolu de référence,
- la sixième opération consiste à calculer les coordonnées des points d'intersection de ces droites verticales avec le plan laser de référence,
- la septième opération consiste à utiliser des mesures associées à l'engin de travaux publics ainsi que certaines valeurs issues des calculs précédents, notamment l'altitude des points calculés lors de la quatrième opération, pour déterminer, par le calcul, les distances qui correspondent aux consignes de l'asservissement à réaliser,

- la huitième opération consiste à comparer les valeurs de consigne susmentionnées et les valeurs correspondantes obtenues à partir des instruments de mesure associés au micro-ordinateur placés sur l'engin de travaux publics, de façon à connaître des distances réelles à asservir,
- la dernière opération consiste à actionner l'outil, par l'intermédiaire d'électrovannes et de vérins prévus à cet effet en fonction des signes des comparaisons effectuées jusqu'à ce que la valeur issue de la comparaison se trouve dans un intervalle centré sur 0 et borné par les impératifs de qualité dimensionnelle imposés par les maîtres d'oeuvre.

Le schéma joint en annexe schématise ces différentes opérations liées à la mise en oeuvre du procédé conforme à l'invention.

**Revendications**

1. Procédé de guidage automatisé d'un engin de travaux publics tel qu'un engin de répandage des couches constitutives d'une chaussé muni d'un outil, notamment d'une lame de nivellement permettant l'obtention d'une surface plane prédéterminée, procédé par lequel on détermine préalablement les points de passage de la chaussée et on place sur ses bords des piquets supports de fils directionnels susceptibles d'être maintenus en permanence en contact avec l'engin de façon à guider son déplacement, procédé caractérisé en ce que :

   - on monte l'outil (1) à la partie inférieure de l'engin de travaux publics de façon à pouvoir faire varier la hauteur (HN) qui correspond à la distance du châssis (2) de cet engin à l'outil (1),
   - on calcule et introduit dans la mémoire d'un micro-ordinateur (7) lié à l'engin les cordonnées xi, yi, zi dans un système tridimensionnel orthonormé Oxyz d'un certain nombre de points kilométriques PKi notamment équidistants de la chaussée correspondant à la position théorique de l'outil lors de la réalisation de celle-ci,
   - on utilise les fils directionnels pour guider l'engin dans le plan x-O-y,
   - au cours de ce déplacement on mesure continuellement la position x y de l'outil dans le plan x-O-y et on transmet cette donnée au micro-ordinateur (7) qui détermine en réponse et par interpolation à partir des points kilométriques l'altimétrie théorique z correspondante,
   - on émet un faisceau, notamment un faisceau laser rotatif décrivant un plan de référence (bb') essentiellement parallèle à la chaussée dont on calcule l'équation avant de l'introduire dans la mémoire du micro-ordinateur (7) de façon à permettre de calculer l'altimétrie réelle de l'outil (1),
   - on fixe à la partie supérieure du châssis (2) au moins un ensemble (8) connu en lui-même constitué par un mât télescopique (9) essentiellement vertical de hauteur variable (HL) à l'extrémité duquel est monté un récepteur (10) asservi de façon à être constamment maintenu dans le plan de référence laser (bb'),
   - on mesure en permanence la hauteur (HL) du mât télescopique (9) et la hauteur (HN) qui correspond à la distance du châssis (2) à l'outil (1) et l'on transmet les hauteurs ainsi mesurées au micro-ordinateur (7),
   - on détermine en permanence l'altimétrie (zl) du récepteur (10) à partir de l'équation du plan de référence,
   - on en déduit l'altimétrie réelle z de l'outil par la formule :

$$z = zl - (HO + HN + HC + HL)$$

   dans laquelle HO correspond à la hauteur constante de l'outil (1) tandis que HC correspond à la hauteur constante du châssis (2),
   - on compare l'altimétrie réelle ainsi calculée à l'altimétrie théorique de l'outil (1) préalablement déterminée par interpolation à partir des points kilométriques, et
   - on modifie le cas échéant en réponse la hauteur (HN) qui correspond à la distance du châssis (2) à l'outil (1) de façon à faire coïncider les altimétries réelle et théorique de ce dernier.

2. Procédé selon la revendication 1, caractérisé en ce que l'on fixe sur le châssis (2) de l'engin, deux récepteurs (10) coopérant avec deux mâts télescopiques (9), respectivement situés de part et d'autre de l'axe longitudinal de l'engin, au niveau des extrémités de l'outil (1) et dont l'un matérialise le bord gauche de la chaussée, tandis que l'autre matérialise le bord droit.

3. Procédé selon la revendication 2, caractérisé en ce que l'on transmet en permanence au micro-ordinateur (7), d'une part, la longueur (HL) de chacun des mâts télescopiques (9) et, d'autre part, la position (HN) des extrémités droite et gauche de l'outil par rapport au châssis (2) de l'engin.

4. Procédé selon l'une quelconque des revendications 1 à 3, caractérisé en ce que l'on calcule les coordonnés xi, yi, zi des points kilométriques (PKi) ainsi que l'équation du plan de référence (bb') dans un repère tridimensionnel orthonormé dit « repère absolu de Lambert » dans lequel l'axe des x est dirigé dans le sens croissant vers l'Est, l'axe des y est dirigé dans le sens croissant vers le Nord géographique et l'axe des z est dirigé dans le sens croissant vers le Zénith.

5. Procédé selon l'une quelconque des revendications 1 à 4, caractérisé en ce que l'on mesure la position xi, yi de l'outil (1), notamment de chacune de ses extrémités droite et gauche, dans le plan x-O-y à partir de valeurs d'abscisse curviligne transmises au micro-ordinateur (7) par au moins une notamment deux roues codeuses (11) montées sur l'engin de part et d'autre de son axe longitudinal.

**6.** Procédé selon la revendication 5, caractérisé en ce que l'on réactualise l'information donnée par les roues codeuses (11) au niveau de piquets, précisément implantés à intervalles réguliers.

**7.** Procédé selon la revendication 6, caractérisé en ce que le châssis de l'engin est muni sur chacun de ses côtés, au droit des extrémités de l'outil (1), d'une tige métallique essentiellement horizontale susceptible de pivoter lorsqu'elle capte un piquet de façon à transmettre une impulsion au micro-ordinateur (7).

**8.** Procédé selon l'une des revendications 1 à 7, caractérisé en ce que, pour obtenir l'altimétrie réelle z de l'outil (1) à partir d'une part, des coordonnées xi, yi, zi des points kilométriques PKi et, d'autre part, des coordonnées réelles x, y mesurées dans le plan x-O-y, on détermine les coordonnées des points kilométriques les plus proches des bords de l'outil (1), et à partir de celles-ci, on calcule l'équation de deux droites théoriques correspondant respectivement aux bords gauche et droit de la chaussée, ensuite et disposant ainsi des coordonnées réelles des points correspondant aux bords gauche et droit de l'outil (1), on calcule l'équation de la droite transversale représentant l'arête de l'outil qui joint ces deux points, on détermine les coordonnées des points d'intersection de cette droite transversale avec les prolongements des mâts télescopiques (9), puis on calcule les équations des droites verticales passant par ces points d'intersection ainsi que les coordonnées des points d'intersection de ces droites verticales avec le plan de référence (bb'), de façon à permettre au micro-ordinateur (7) de mettre en oeuvre l'asservissement recherché à partir des informations qui lui sont transmises en permanence.

**9.** Procédé selon la revendication 8, caractérisé en ce que, dans l'hypothèse où les coordonnées x, y mesurées montrent que l'un des bords de l'outil (1) est éloigné d'un point kilométrique d'une distance supérieure à une valeur constante C prédéterminée, on choisit pour droite théorique correspondant à ce bord de la chaussée, la droite joignant les points kilométriques PKi et PKi$_{+1}$ entre lesquels se trouve celui-ci.

**10.** Procédé selon la revendication 8, caractérisé en ce que, dans l'hypothèse où les coordonnées x, y mesurées montrent que l'un des bords de l'outil (1) est éloigné d'un point kilométrique PKi d'une distance inférieure à une valeur constante C prédéterminée, on détermine les équations des deux droites joignant respectivement les points kilométriques PKi et PKi$_{+1}$ d'une part, et PKi et PKi$_{-1}$ d'autre part, on détermine sur chacune de ces droites les coordonnées des points PKi + C et PKi - C, et on choisit pour droite théorique correspondante à ce bord de la chaussée, la droite joignant les deux points PKi + C et PKi - C.

**Patentansprüche**

**1.** Verfahren zur automatischen Steuerung einer Maschine für öffentliche Arbeiten wie eine Maschine zum Ausbreiten von Schichten, die eine Straße bilden, versehen mit einem Werkzeug, insbesondere mit einer Nivellierungsklinge, die es erlaubt, eine vorbestimmte ebene Fläche zu erhalten, wobei zuvor die Durchgangspunkte der Straße bestimmt und an deren Rändern Stützpfähle für Richtschnüre angeordnet werden, geeignet, ständig mit der Maschine in Kontakt gehalten zu werden, derart, daß deren Verfahren geführt wird, gekennzeichnet durch die folgenden Merkmale:

- das Werkzeug (1) wird am unteren Teil der Maschine für öffentliche Arbeiten derart montiert, daß die Höhe (HN), die dem Abstand des Fahrgestells (2) zwischen Maschine und Werkzeug (1) entspricht, verändert werden kann;
- es werden die Daten xi, yi, zi in einem dreidimensionalen, rechtwinkligen System Oxyz einer gewissen Anzahl von Kilometerpunkten PKi, insbesondere äquidistant der Straße entsprechend der theoretischen Position des Werkzeuges bei dessen Einsatz berechnet und in den Speicher eines Mikrorechners (7) eingegeben, der mit der Maschine verbunden ist;
- die Richtschnüre zum Führen der Maschine in der Ebene x-O-y werden verwendet;
- im Verlaufe des Verfahrens wird kontinuierlich die Position x y des Werkzeuges in der Ebene x-O-y gemessen und es werden diese Daten dem Mikrorechner (7) eingegeben, der ausgehend von den Kilometerpunkten die entsprechende theoretische Altimetrie daraufhin durch Interpolation bestimmt;
- es wird ein Strahlenbündel emittiert, insbesondere ein rotierendes Laserstrahlenbündel, das eine zur Straße im wesentlichen parallele Bezugsebene (bb') beschreibt, woraus die Gleichung vor dem Eingeben in den Speicher des Mikrorechners (7) berechnet wird, derart, daß es möglich ist, die reelle Altimetrie des Werkzeuges (1) zu berechnen;
- am oberen Teil des Fahrgestells (2) wird wenigstens eine ansich bekannte Einheit (8) befestigt, die aus einem Teleskopmast (9) besteht, der im wesentlichen vertikal und von variabler Höhe (HL) ist, an dessen Ende ein Aufnehmer (10) angeordnet ist, der dazu dient, ständig in der Laser-Bezugsebene (bb') gehalten zu werden;
- es wird ständig die Höhe (HL) des Teleskopmastes (9) sowie die Höhe (HN) gemessen, die den Anstand zwischen Fahrgestell (2) und dem Werkzeug (1) entspricht, und es werden derart gemessenen Höhenwerte dem Mikrorechner (7) eingespeist;
- es wird ständig die Altimetrie (zl) des Aufnehmers (10) bestimmt, ausgehend von der Gleichung der Bezugsebene;
- hieraus wird die reelle Altimetrie z durch die folgende Formel bestimmt:

$$z = zl - (HO + HN + HC + HL)$$

- wobei HO der konstanten Höhe des Werkzeuges (1) entspricht, während HC der konstanten Höhe des Fahrgestells (2) entspricht;
- es wird die reelle Altimetrie, die derart berechnet wurde, mit der zuvor bestimmten theoretischen Altimetrie des Werkzeuges (1) durch Interpolation ausgehend von den Kilometerpunkten berechnet; und
- gegebenenfalls wird in Abhängigkeit hiervon die Höhe (HN), die dem Abstand zwischen Fahrgestell (2) und Werkzeug (1) entspricht, derart verändert, daß die reelle und die theoretische Altimetrie des Letztgenannten miteinander zusammenfallen.

2. Verfahren nach Anspruch 1, dadurch gekennzeichnet, daß am Fahrgestell (2) der Maschine zwei Aufnehmer (10) befestigt werden, die mit zwei Teleskopmasten (9) zusammenarbeiten, die jeweils beidseits der Senkachse der Maschine angeordnet sind, und zwar auf der Höhe der Enden des Werkzeuges (1), wobei der eine den linken Rand der Straße erfaßt, und der andere den rechten Rand.

3. Verfahren nach Anspruch 2, dadurch gekennzeichnet, daß dem Rechner (7) ständig einerseits die Länge (HL) eines jeden Teleskopmastes (9) und andererseits die Position (HN) des rechten und des linken Endes des Werkzeuges in bezug auf das Fahrgestell (2) der Maschine eingegeben werden.

4. Verfahren nach einem der Ansprüche 1 bis 3, dadurch gekennzeichnet, daß die Daten xi, yi, zi der Kilometerpunkte (PKi) berechnet werden, wie auch die Gleichung der Bezugsebene (bb') in einer dreidimensionalen rechteckigen Marke, der sogenannten "absoluten Marke nach Lambert", wobei die Achse x im zunehmenden Sinne nach Osten gerichtet ist, die Achse y im zunehmenden Sinne nach dem geographischen Norden, und die Achse z zunehmend nach dem Zenith.

5. Verfahren nach einem der Ansprüche 1 bis 4, dadurch gekennzeichnet, daß die Position xi, yi des Werkzeuges (1) gemessen wird, insbesondere jedes seiner Enden rechts und links, in der x-O-y-Ebene, ausgehend von gekrümmten Werten der Abszisse, übertragen auf den Mikrorechner (7) mittels wenigstens eines, insbesondere zweier Codierräder (11), die an der Maschine beidseits ihrer Längsachse angeordnet sind.

6. Verfahren nach Anspruch 5, dadurch gekennzeichnet, daß die durch die Codierräder (11) auf der Höhe der Pfähle, genau in regelmäßigen Abständen eingesetzt, erhaltener Information reaktualisiert wird.

7. Verfahren nach Anspruch 6, dadurch gekennzeichnet, daß das Fahrgestell der Maschine auf seine beiden Seiten gradlinig zu den Enden des Werkzeuges (1) mit einem im wesentlichen horizontalen Metallstab versehen ist, der dann zu schwenken vermag, wenn er einen Pfahl erfaßt, derart, daß er dem Rechner (7) einen Impuls eingibt.

8. Verfahren nach einem der Ansprüche 1 bis 7, dadurch gekennzeichnet, daß zum Erhalten der reellen Altimetrie z des Werkzeuges (1) einerseits ausgehend von den Daten xi, yi, zi der Kilometerpunkte PKi und andererseits von den reellen Daten x, y, gemessen in der Ebene x-O-y, die Daten der Kilometerpunkte bestimmt werden, die am nächsten bei den Rändern des Werkzeuges (1) liegen, und daß ausgehend hiervon die Gleichung der beiden theoretischen Geraden berechnet wird, jeweils dem rechten Rand und dem linken Rand der Straße entsprechend, daß sodann unter Verwendung der reellen Daten der Punkte entsprechend dem rechten und linken Rand des Werkzeuges (1) die Gleichung der transfersalen Geraden berechnet wird, die die Kante des Werkzeuges darstellt, die diese beiden Punkte miteinander verbindet, daß die Daten der Schnittpunkte dieser transfersalen Geraden mit den Verlängerungen der Teleskopmaste (9) ermittelt werden, daß sodann die Gleichungen der vertikalen Geraden, die durch diese Schnittpunkte hindurchlaufen, wie auch die Daten der Schnittpunkte dieser vertikalen Geraden mit der Bezugsebene (bb') berechnet werden, derart, daß es dem Mikrorechner (7) ermöglicht wird, die ermittelte Abhängigkeit zu verwirklichen, ausgehend von Informationen, die ihm ständig eingespeist werden.

9.  Verfahren nach Anspruch 8, dadurch gekennzeichnet, daß unter der Voraussetzung, daß die gemessenen Daten x, y zeigen, daß einer der Ränder des Werkzeuges (1) von einem kilometrischen Punkt um einen Abstand entfernt ist, der größer als ein vorgegebener konstanter Wert C, als theoretische Gerade entsprechend dem Rand der Straße jene Gerade gewählt wird, die die kilometrischen Punkte PKi und PKi$_{+1}$, zwischen welchen sich diese befindet, gewählt wird.

10. Verfahren nach Anspruch 8, dadurch gekennzeichnet, daß unter der Annahme, daß die gemessenen Daten x, y zeigen, daß einer der Ränder des Werkzeuges (1) von einem kilometrischen Punkt PKi um einen Abstand entfernt ist, der kleiner ist, als ein vorgegebener konstanter Wert C, die Gleichungen der beiden Geraden bestimmt werden, die jeweils die kilometrischen Punkte PKi und PKi$_{+1}$ einerseits miteinander verbinden, und PKi und PKi-1 andererseits, auf jeder dieser Geraden die Daten der Punkte PKi+C und PKi-C bestimmt werden, und daß man als theoretische Gerade, entsprechend diesem Rand der Straße, die Grade auswählt, die die beiden Punkte PKi+C und PKi-C verbindet.

**Claims**

1.  Automatic guiding method for a civil engineering machine such as a machine for spreading the layers forming a road, which machine is equipped with a tool, especially a levelling blade enabling a predetermined flat surface to be obtained, according to which method the points of passage of the road are determined beforehand and support posts for directional wires which can be maintained permanently in contact with the machine in order to guide its displacement are placed on the edges of the road, characterised in that:

    -   the tool (1) is mounted on the lower portion of the civil engineering machine in order to be able to vary the height (HN) corresponding to the distance between the chassis (2) of the machine and the tool (1);
    -   the coordinates xi, yi, zi in a three-dimensional orthonormed system Oxyz of a certain number of, especially equidistant, kilometre points PKi of the road which correspond to the theoretical position of the tool during the production of the road, are calculated and introduced into the memory of a microcomputer (7) connected to the machine;
    -   the directional wires are used to guide the machine in the x-O-y plane;
    -   in the course of this displacement, the position x y of the tool in the x-O-y plane is measured continuously and this datum is transmitted to the microcomputer (7) which, in response, determines the corresponding theoretical height z by interpolation on the basis of the kilometre points;
    -   a beam is emitted, especially a rotating laser beam describing a reference plane (bb') substantially parallel to the road, the equation of which is calculated before introducing it into the memory of the microcomputer (7) in order to permit the calculation of the actual height of the tool (1);
    -   at least one assembly (8) known <u>per se</u> is fixed to the upper portion of the chassis (2) and is formed by a substantially vertical telescopic mast (9) of variable height (HL) at the end of which is mounted a receiver (10) which is controlled in such a manner that it is maintained constantly in the laser reference plane (bb');
    -   the height (HL) of the telescopic mast (9) and the height (HN) corresponding to the distance between the chassis (2) and the tool (1) is measured continuously and the heights thus measured are transmitted to the microcomputer (7);
    -   the height (zl) of the receiver (10) is determined continuously from the reference plane equation;
    -   the actual height z of the tool is deduced therefrom by the formula:

        $$z = zl - (HO + HN + HC + HL)$$

        wherein HO corresponds to the constant height of the tool (1) while HC corresponds to the constant height of the chassis (2);
    -   the actual height thus calculated is compared with the theoretical height of the tool (1) previously determined by interpolation from the kilometre points; and
    -   the height (HN) corresponding to the distance between the chassis (2) and the tool (1) is modified, if necessary, in response, in such a manner as to cause the actual and theoretical heights of the tool to coincide.

2.  Method according to Claim 1,
    characterised in that two receivers (10) are fixed to the chassis (2) of the machine and cooperate with two telescopic masts (9) which are located one on each side of the longitudinal axis of the machine, in the area of the ends of the tool (1), and one of which represents the left edge of the road while the other represents the right edge.

3. Method according to Claim 2,
characterised in that, on the one hand, the length (HL) of each of the telescopic masts (9) and, on the other hand, the position (HN) of the right and left ends of the tool relative to the chassis (2) of the machine are transmitted continuously to the microcomputer (7).

4. Method according to any one of Claims 1 to 3, characterised in that the coordinates $x_i$, $y_i$, $z_i$ of the kilometre points (PKi), and also the reference plane equation (bb') are calculated in an orthonormed three-dimensional frame referred to as the "absolute Lambert frame" in which the x axis is directed in the direction increasing towards the east, the y axis is directed in the direction increasing towards geographical north and the z axis is directed in the direction increasing towards the zenith.

5. Method according to any one of Claims 1 to 4, characterised in that the position $x_i$, $y_i$ of the tool (1), especially of each of its right and left ends, in the x-O-y plane is measured on the basis of curvilinear abscissa values transmitted to the microcomputer (7) by at least one and especially two coding wheels (11) which are mounted on the machine one on each side of its longitudinal axis.

6. Method according to Claim 5,
characterised in that the information given by the coding wheels (11) is re-updated in the area of the posts, which are planted accurately at regular intervals.

7. Method according to Claim 6,
characterised in that the chassis of the machine is equipped on each of its sides, at right-angles to the ends of the tool (1), with a substantially horizontal metal rod which is capable of pivoting when it intercepts a post, in such a manner as to transmit a pulse to the microcomputer (7).

8. Method according to any one of Claims 1 to 7, characterised in that, in order to obtain the actual height z of the tool (1) from, on the one hand, the coordinates $x_i$, $y_i$, $z_i$ of the kilometre points PKi and, on the other hand, from the actual coordinates x, y measured in the x-O-y plane, the coordinates of the kilometre points closest to the edges of the tool (1) are determined and, from those coordinates, the equation of two theoretical straight lines corresponding to the left and right edges, respectively, of the road is calculated, then, thus having available the actual coordinates of the points corresponding to the left and right edges of the tool (1), the equation of the transverse straight line representing the edge of the tool and joining those two points is calculated, the coordinates of the points of intersection of this transverse straight line with the extensions of the telescopic masts (9) are determined, then the equations of the vertical straight lines passing through these points of intersection, and also the coordinates of the points of intersection of these vertical straight lines with the reference plane (bb') are calculated in order to enable the microcomputer (7) to implement the desired control on the basis of the data transmitted to it continuously.

9. Method according to Claim 8,
characterised in that, in the case where the measured coordinates x, y show that one of the edges of the tool (1) is spaced away from a kilometre point by a distance greater than a predetermined constant value C, the straight line joining the kilometre points PKi and $PKi_{+1}$ between which that edge of the road is located is chosen as the theoretical straight line corresponding thereto.

10. Method according to Claim 8,
characterised in that, in the case where the measured coordinates x, y show that one of the edges of the tool (1) is spaced away from a kilometre point PKi by a distance less than a predetermined constant value C, the equations of the two respective straight lines joining the kilometre points PKi and $PKi_{+1}$, on the one hand, and PKi and $PKi_{-1}$, on the other hand, are determined, the coordinates of the points PKi + C and PKi - C are determined on each of these straight lines, and the straight line joining the two points PKi + C and PKi - C is chosen as the theoretical straight line corresponding to that edge of the road.

## FIG.1

## FIG.2

# FIG.3

# FIG. 4